# EUROPEAN PATENT APPLICATION

(11) **EP 1 712 590 A1**
(43) Date of publication of application: **18.10.2006**
(21) Application number: 05741313.0
(22) Date of filing: 12.05.2005
(51) Int. Cl.: C08L 21/00, B60C 1/00, C08K 5/56, C09J 11/06, C09J 121/00

(54) **RUBBER COMPOSITION FOR ADHESIVE BONDING**

(30) Priority: 17.05.2004 JP 2004146629
(71) Applicant: THE YOKOHAMA RUBBER CO., LTD., Tokyo 105-8685 (JP)
(72) Inventor: TSUJI, Takue, c/o THE YOKOHAMA RUBBER CO., LTD., Hiratsuka-shi, Kanagawa 254-8601 (JP)
(74) Representative: Vossius & Partner
(86) International application number: PCT/JP2005/009104
(87) International publication number: WO 2005/111141

(57) **Abstract**

An adhesive rubber composition having improved strength at break containing 100 parts by weight of a rubber component and 0.1 to 3 parts by weight of a metal acetylacetonate having an average particle size of 50 µm or less.

## Description

### TECHNICAL FIELD

The present invention relates to an adhesive rubber composition, more particularly relates to an adhesive rubber composition having improved properties at break by blending thereinto a predetermined amount of a metal acetylacetonate defined in particle size.

### BACKGROUND ART

For bonding of rubber and metals such as steel cord rubber of tires, an organic cobalt acid salt is generally added. There are various types of organic cobalt acid salts. Among these, cobalt acetylacetonate is used for the purpose of preventing oxidation and degradation and for improving the bonding (e.g., see Japanese Unexamined Patent Publication (Kokai) No. 54-47778, Japanese Unexamined Patent Publication (Kokai) No. 5-65370, etc.). On the other hand, rubbers designed for bonding with metal are, for example, often used as a composite material such as a belt cord of a tire, and therefore, the physical strength or breaking properties become important. However, cobalt acetylacetonate is a substance insoluble in rubber and not good in dispersion, and therefore, often causes problems such as variations in physical properties, in particular a decrease in the strength at break.

### DISCLOSURE OF THE INVENTION

Accordingly, the object of the present invention is to improve the properties at break of an adhesive rubber composition containing cobalt acetylacetonate or another metal acetylacetonate.

In accordance with the present invention, there is provided an adhesive rubber composition comprising 100 parts by weight of a rubber component and 0.1 to 3 parts by weight of a metal acetylacetonate having an average particle size of 50 µm or less.

In accordance with the present invention, there is also provided an adhesive rubber composition obtained by mixing 100 parts by weight of a rubber component and a metal acetylacetonate having an average particle size of 50 µm or less at a temperature of the highest temperature reached during the mixing of 140°C or less.

### BEST MODE FOR CARRYING OUT THE INVENTION

In this description and claims, the singular form shall include the plural form unless it is clear from the context that the form is singular.

In the present invention, we found that when the particle size of the metal acetylacetonate blended into an adhesive rubber composition is made to a certain size or less and preferably further defining the mixing temperature as a certain temperature or less, the properties at break of the adhesive rubber composition are remarkably improved.

As the metal acetylacetonate usable in the adhesive rubber composition of the present invention, cobalt (II) acetylacetonate, cobalt (III) acetylacetonate, nickel (II) acetylacetonate, zirconium (IV) acetylacetonate, zinc (II) acetylacetonate, copper (II) acetylacetonate, iron (II) acetylacetonate, iron (III) acetylacetonate, chrome (III) acetylacetonate, manganese (II) acetylacetonate, molybdenum (II) acetylacetonate, etc. may be exemplified. Among these, cobalt (II) acetylacetonate and/or cobalt (III) acetylacetonate are particularly preferably used.

In the adhesive rubber composition of the present invention, a metal acetylacetonate having an average particle size of 50 µm or less, preferably 10 to 20 µm, is compounded in an amount of 0.1 to 3 parts by weight, preferably 0.5 to 2 parts by weight, based upon 100 parts by weight of a rubber component, the properties at break are improved, while the good bondability is maintained. If the particle size of the metal acetylacetonate is more than 50 µm, the bondability and the strength at break of the rubber composition thus obtained is unpreferably decreased. Further, if the amount blended is less than 0.1 part by weight, the expected effects cannot be obtained, while conversely if the amount is more than 3 parts by weight, the strength at break is unpreferably decreased.

Further, in the adhesive rubber composition of the present invention, it is more preferable to control the highest temperature reached during mixing, when a predetermined amount of metal acetylacetonate having the predetermined particle size is blended into a rubber composition to a temperature range of 140°C or less, preferably 90 to 120°C. When the mixing is carried out in this temperature range, the dispersion of the metal acetylacetonate in the rubber becomes good and a decrease in the strength at break can be further suppressed.

As the rubber component usable in the adhesive rubber composition of the present invention, any rubber usable as a tire use rubber such as a diene-based rubber can be used alone or in any mixture thereof. Specifically, various types of natural rubber (NR) or synthetic diene-based rubbers such as various types of polybutadiene rubber (BR), styrene-butadiene copolymer rubber (SBR), polyisoprene rubber (IR), butyl rubber (IIR), acrylonitrile-butadiene copolymer rubber, chloroprene rubber, ethylene-propylene-diene copolymer rubber, styrene-isoprene copolymer rubber, styrene-butadiene copolymer rubber, etc. may be exemplified. Among these, blends making extensive use of natural rubber are desirable from the viewpoint of the bonding and the rubber strength.

The sulfur generally used in the adhesive rubber composition of the present invention is blended, into 100 parts by weight of the rubber component, in an amount of preferably 3 to 10 parts by weight, more preferably 5 to 8 parts by weight. If the amount of the sulfur blended is small, the bonding is liable to deteriorate, while conversely if the amount is too large, the physical properties of the rubber composition thus obtained is decreased and the bonding after aging is also liable to deteriorate.

The adhesive rubber composition of the present invention may further contain another vulcanization or cross-linking agent, vulcanization or cross-linking accelerator, carbon black, silica, or other reinforcing filler, various types of oils, an antioxidant, a filler, a softening agent, a plasticizer, or various other types of compounding agents and additives generally used for tire use etc. The compounding amounts of these compounding agents and additives may be made the generals amounts insofar as the object of the present invention is not contravened. Among these, the preferable carbon black is N234 grade or N330 grade used in an amount of 45 to 65 phr (i.e., number of parts by weight based upon 100 parts by weight of rubber). Particularly preferably, zinc white is blended in an amount of 3 to 11 phr, stearic acid 1 phr or less, and the vulcanization accelerator 1 phr or less.

### Examples

Examples, Comparative Examples, and Standard Examples will now be explained to further illustrate the present invention, but the scope of the present invention is not limited to these Examples needless to say.

### Standard Example 1, Examples 1 - 2 and Comparative Example 1

Based on ASTM D1871, the components of each of the formulations shown in the following Table I were mixed at a mixing temperature of 120°C. Each unvulcanized rubber composition obtained then had 3+9+15 (0.17) structure (note: this meaning a three-layer twisted structure of 3, 9 and 15 strands of diameters of 0.17 mm) brass-plated steel cord buried therein to a buried length of 25 mm, then was vulcanized at 148°C for 45 minutes to obtain a sample. Each sample was further allowed to stand under conditions of 130°C and a humidity of 95% for 72 hours for moist heat degradation, then the cord was pulled out and the rubber coverage rate (%) was measured.

The results are shown in Table I. The large the value, the higher the rubber coverage rate and the better the resistance to moist heat deterioration.

**Table I**

| | Comparative Example 1 | Example 1 | Example 2 | Standard Example 1 |
|---|---|---|---|---|
| Formulation (parts by weight) | | | | |
| Natural rubber ¹⁾ | 100 | 100 | 100 | 100 |
| Carbon black²⁾ | 58 | 58 | 58 | 58 |
| Zinc oxide³⁾ | 9 | 9 | 9 | 9 |
| Antioxidant⁴⁾ | 1.5 | 1.5 | 1.5 | 1.5 |
| Stearic acid⁵⁾ | 0.5 | 0.5 | 0.5 | 0.5 |
| Sulfur⁶⁾ | 7 | 7 | 7 | 7 |
| Vulcanization accelerator⁷⁾ | 0.7 | 0.7 | 0.7 | 0.7 |
| Cobalt naphthenate⁸⁾ | 1.6 | - | - | - |
| Cobalt (III) acetylacetonate (particle size 10 µm)⁹⁾ | - | 1 | - | - |
| Cobalt (III) acetylacetonate (particle size 50 µm)⁹⁾ | - | - | 1 | - |
| Cobalt (III) acetylacetonate (particle size 200 µm)⁹⁾ | - | - | - | 1 |
| Evaluated physical properties | 65 | 100 | 100 | 100 |
| Rubber coverage rate (wet heat degradation)(%) | | | | |

| | | | | |
|---|---|---|---|---|
| (Notes) 1): RSS#3 2): N326, Seast 300 (made by Tokai Carbon) 3): Zinc White, Ginrei R (made by Toho Zinc) 4): Suntflex 6PPD (made by Flexsys) 5): Beads Stearic Acid (made by NOF Corporation) 6): Crystex HSOT20 (made by Akzo Nobel) 7): Noccelar DZ-G (made by Ouchi Shinko Chemical) 8): Cobalt naphthenate 10% (made by Nikko Materials) 9): Nihonkagakusangyo cobalt (III) acetylacetonate (for different particle sizes of cobalt (III) acetonate, commercially available cobalt (III) acetylacetonate product was pulverized and sieved to obtain different average particle size material for use) | | | | |

### Examples 1 - 3, Comparative Example 2 and Standard Examples 1 - 2

The components of each of the formulations of the following Table II were mixed at its respective predetermined mixing temperature to obtain a rubber composition, then the result art composition was vulcanized by pressing at 148°C for 45 minutes to form a 2 mm thick rubber sheet. From each sheet, a JIS No. 3 dumbbell shaped test piece was punched out and measured for the strength at break, based on JIS K6251.

The results are shown in Table II, indexed to the values of Comparative Example 2 at the different mixing temperatures as 100. The larger the value, the more the decrease in the strength at break is suppressed and therefore the better.

**Table II**

| | Comp. Ex. 2 | Ex. 1 | Ex. 2 | Ex. 3 | Comp. Ex. 1 | Stand. Ex. 2 |
|---|---|---|---|---|---|---|
| Formulation (parts by weight) | | | | | | |
| Natural rubber¹⁾ | 100 | 100 | 100 | 100 | 100 | 100 |
| Carbon black²⁾ | 58 | 58 | 58 | 58 | 58 | 58 |
| Zinc oxide³⁾ | 9 | 9 | 9 | 9 | 9 | 9 |
| Antioxidant⁴⁾ | 1.5 | 1.5 | 1.5 | 1.5 | 1.5 | 1.5 |
| Stearic acid⁵⁾ | 0.5 | 0.5 | 0.5 | 0.5 | 0.5 | 0.5 |
| Sulfur⁶⁾ | 7 | 7 | 7 | 7 | 7 | 7 |
| Vulcanization accelerator⁷⁾ | 0.7 | 0.7 | 0.7 | 0.7 | 0.7 | 0.7 |
| Cobalt (III) acetyl acetonate (particle size 10 µm)⁸⁾ | - | 1 | - | - | - | - |
| Cobalt (III) acetyl acetonate (particle size 20 µm)⁸⁾ | - | - | - | 1 | - | - |
| Cobalt (III) acetyl acetonate (particle size 50 µm)⁸⁾ | - | - | 1 | - | - | - |
| Cobalt (III) acetyl acetonate (particle size 100 µm)⁸⁾ | - | - | - | - | - | 1 |
| Cobalt (III) acetyl acetonate (particle size 200 µm)⁸⁾ | - | - | - | - | 1 | 1 |
| Evaluated physical properties | | | | | | |
| Strength at breaks Strength (mixing temperature 100°C)(index) | 100 | 96.4 | 95.3 | 101.2 | 79.1 | 86.2 |
| Strength at breaks Strength (mixing temperature 120°C)(index) | 100 | 100.8 | 97.6 | 99.6 | 82.2 | 87.0 |
| Strength at breaks Strength (mixing temperature 140°C)(index) | 100 | 98.3 | 96.6 | 97.5 | 81.0 | 89.5 |
| Strength at breaks Strength (mixing temperature 160°C) (index) | 100 | 95.1 | 92.4 | 93.3 | 83.6 | 88.4 |
| Strength at breaks Strength (mixing temperature 180°C)(index) | 100 | 93.2 | 89.1 | 90.5 | 80.0 | 85.5 |

| | | | | | | |
|---|---|---|---|---|---|---|
| (Notes) 1): RSS#3 2): N326, Seast 300 (made by Tokai Carbon) 3): Zinc White, Ginrei R (made by Toho Zinc) 4): Suntflex 6PPD (made by Flexsys) 5): Beads Stearic Acid (made by NOF Corporation) 6): Crystex HSOT20 (made by Akzo Nobel) 7): Noccelar DZ-G (made by Ouchi Shinko Chemical) 8): See notes of Table 1 | | | | | | |

From the results of the above Table I and Table II, it is clear that, in an adhesive rubber composition using a metal acetylacetonate having an average particle size of 50 µm or less, compared with those using the same having a particle size of 100 µm or 200 µm of the prior art, the strength at break is superior, while maintaining the bondability. Further, it is clear that, when the mixing temperature is 140°C or less, compared with a higher mixing temperature, the decrease in the strength at break can be suppressed more.

### INDUSTRIAL APPLICABILITY

The adhesive rubber composition according to the present invention maintains bondability with steel cord and other metal members and at the same time is superior in properties at break as a rubber, and therefor so can be effectively used for rubber compositions for covering the steel cords of tires, belt cord rubber for trucks and buses, etc.

## Claims

1. An adhesive rubber composition comprising 100 parts by weight of a rubber component and 0.1 to 3 parts by weight of a metal acetylacetonate having an average particle size of 50 µm or less.

2. An adhesive rubber composition as claimed in claim 1, wherein said rubber component and metal acetylacetonate are mixed at a temperature of the highest temperature reached during mixing of 140°C or less.

3. An adhesive rubber composition as claimed in claim 1 or 2, where said metal acetylacetonate is cobalt (II) acetylacetonate or cobalt (III) acetylacetonate or a mixture thereof.

4. A tire using an adhesive rubber composition according to any one of claims 1 to 3.
